# EUROPEAN PATENT SPECIFICATION

(11) **EP 4 020 776 B1**
(45) Date of publication and mention of the grant of the patent: **24.04.2024**
(21) Application number: 21217389.2
(22) Date of filing: 23.12.2021
(51) Int. Cl.: H02K 15/00, H02K 15/06, H02K 1/16, H02K 3/12

(54) **METHOD FOR MANUFACTURING ARMATURE AND CORRESPONDING ARMATURE**
VERFAHREN ZUR HERSTELLUNG EINES ANKER UND ENTSPRECHENDER ANKER
PROCÉDÉ DE FABRICATION D'ARMATURE ET ARMATURE CORRESPONDANTE

(30) Priority: 25.12.2020 JP 2020216267
(43) Date of publication of application: 29.06.2022
(73) Proprietor: Toyota Boshoku Kabushiki Kaisha, Kariya-shi, Aichi-ken 448-8651 (JP)
(72) Inventor: ARAI, Yasunari, Kariya-shi, 448-8651 (JP); NOMURA, Takeshi, Kariya-shi, 448-8651 (JP); TAKEMOTO, Masaaki, Kariya-shi, 448-8651 (JP)
(74) Representative: TBK

(56) References cited:
- EP-A1- 3 651 317
- WO-A1-2016/113145
- DE-A1- 3 347 195
- JP-A- 2012 175 748
- JP-A- 2014 030 332

## Description

### 1. Field

The present disclosure relates to a method for manufacturing an armature and relates to an armature.

### 2. Description of Related Art

JP 2002 125338 A discloses a method for manufacturing a stator that serves as an armature. The stator is part of an alternator. The stator includes an iron core and a stator coil. The iron core includes slots. The stator coil is coupled to the slots of the iron core. In the method for manufacturing the stator disclosed in the document, conductors of the stator coil are each bent and deformed to a specific shape in advance. Then, the conductors bent and deformed are partially arranged in each of the slots of the iron core. Subsequently, the conductors are pressed in each slot so that the cross-sectional shapes of the conductors are plastically deformed. This reduces the gaps between the conductors and each slot and thus increases the space factor of the stator coil in the slot.

If the conductors are pressed in each slot of the iron core such as in the method for manufacturing the stator disclosed in the document, the deformation of the cross-sectional shapes of the conductors may extend the conductors in the axial direction of the iron core. This potentially increases the amount of a coil end of the stator coil that protrudes from the iron core and thus enlarges the stator. In the method for manufacturing the stator disclosed in the document, this problem has not been considered. Thus, there is still room for improvement in this problem.
EP 3 651 317 A1 discloses a method for manufacturing an armature having the features of the preamble of claim 1. JP 2012 175748 A, JP 2014 030332 A, DE 33 47 195 A1 and WO 2016/113145 A1 disclose further related prior art.

### SUMMARY

It is an objective of the present disclosure to provide a method for manufacturing an armature that prevents a coil from being enlarged while improving the space factor of the coil.

The above objective is achieved by a method for manufacturing an armature having the features of claim 1. Advantageous further developments are set out in the dependent claim.

Other features and aspects will be apparent from the following detailed description, the drawings, and the claims.

### BRIEF DESCRIPTION OF THE DRAWINGS

Fig. 1 is a perspective view of a stator.
Fig. 2 is an enlarged cross-sectional view of the stator.
Fig. 3 is a perspective view of a conductor coupled to the stator core.
Fig. 4 is a cross-sectional view of the conductors pressed in a first step in a state of being arranged in each slot.
Fig. 5 is a cross-sectional view of a first jig arranged in the slot.
Fig. 6 is a cross-sectional view of the conductors that are pressed using the first jig.
Fig. 7 is a cross-sectional view of the conductors that are bent using the first jig.
Fig. 8 is a cross-sectional view of the conductors pressed in a second step in a state of being arranged in the slot.
Fig. 9 is a cross-sectional view of a second jig arranged in the slot.
Fig. 10 is a cross-sectional view of the conductors that are pressed using the second jig.
Fig. 11 is a cross-sectional view of the conductors pressed in a third step in a state of being arranged in the slot.
Fig. 12 is a cross-sectional view of a third jig arranged in the slot.
Fig. 13 is a cross-sectional view of the conductors that are pressed using the third jig.
Fig. 14 is a cross-sectional view of the conductors that are bent using the third jig.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

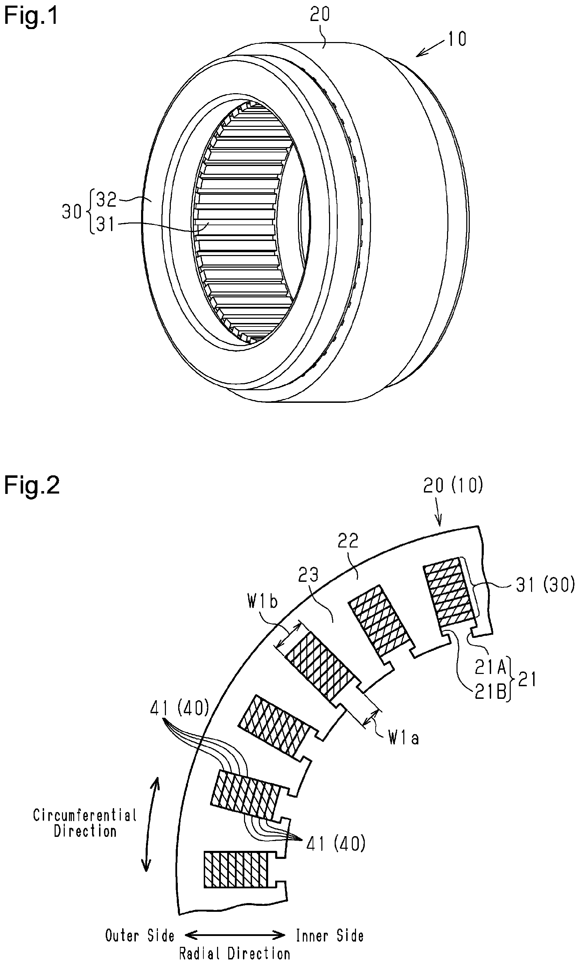

An armature and a method for manufacturing an armature according to an embodiment will now be described with reference to Figs. 1 to 14. In the present embodiment, a stator 10 will be described as an example of the armature.

As shown in Fig. 1, the stator 10 includes a stator core 20 serving as an iron core and a stator coil 30 coupled to the stator core 20. The stator core 20 is substantially cylindrical. The stator core 20 is formed by stacking, for example, electrical steel sheets that are thin and annular.

As shown in Fig. 2, the stator core 20 includes slots 21. The slots 21 include a back yoke 22 and teeth 23. The back yoke 22 is annular. The teeth 23 protrude inward from the inner circumferential surface of the back yoke 22 in the radial direction of the stator core 20 (hereinafter simply referred to as the radial direction). The teeth 23 are spaced apart from each other in the circumferential direction. In the present embodiment, the teeth 23 are T-shaped in plan view. That is, part of the length of the tip (inner circumferential portion) of each of the teeth 23 in the circumferential direction is relatively long. The inner circumferential surface of the back yoke 22 and the side surfaces of the teeth 23 form the inner circumferential surfaces of the slots 21.

Each slot 21 extends in the radial direction and opens in the inner circumferential surface of the stator core 20. Each slot 21 includes an opening portion 21A defining an opening and a main portion 21B located outward from the opening portion 21A in the radial direction. Width W1b of the main portion 21B is fixed in the radial direction and is greater than width W1a of the opening portion 21A.

As shown in Figs. 1 and 2, the stator coil 30 includes an arrangement portion 31 arranged in each slot 21 and a coil end 32 arranged outside of the slots 21. The stator coil 30 includes three stator coils 30 that correspond to a U-phase coil, a V-phase coil, and a W-phase coil. The configurations of the U-phase coil, the V-phase coil, and the W-phase coil are substantially the same. Thus, these coils will now be simply described as the stator coil 30 without being differentiated.

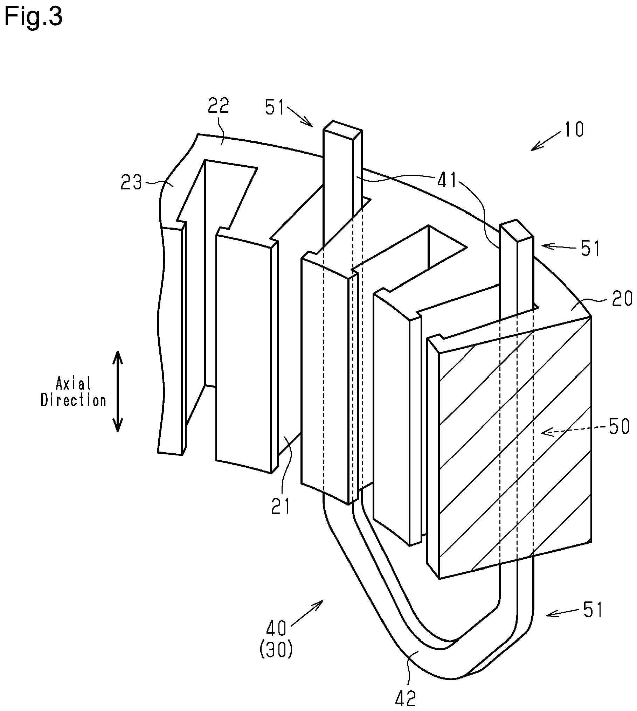

As shown in Fig. 3, the stator coil 30 includes a conductor 40. In the present embodiment, the conductor 40 is a square wire having a rectangular cross-section. The conductor 40 may be a square wire having a polygonal cross-section other than a rectangular cross-section or may be a round wire having a round cross-section. The conductor 40 is made of metal, such as aluminum. The surface of the conductor 40 may include an insulative coating layer. The conductor 40 includes two linear portions 41 that extend in parallel to each other and a curved portion 42 that is extended and curved so as to connect the basal ends (lower ends in Fig. 3) of the linear portions 41. Each linear portion 41 is inserted through the corresponding slot 21 from the distal end (upper end in Fig. 3) of the linear portion 41 in the axial direction of the stator core 20 (hereinafter simply referred to as the axial direction). The basal end of the linear portion 41 is arranged in the slot 21. The distal end of the linear portion 41 is arranged outside of the slot 21. The conductor 40 includes inner portions 50 arranged in the slots 21 and outer portions 51 located outside of the slots 21. That is, the inner portions 50 are the basal ends of the linear portions 41, and the outer portions 51 are the distal ends of the linear portions 41 or the curved portion 42.

As shown in Fig. 2, eight linear portions 41 of conductors 40 are arranged in each slot 21 in the radial direction. Two linear portions 41 of one conductor 40 are each inserted through a different slot 21. The conductors 40 are coupled to the stator core 20 and then shaped into a desired form through, for example, a pressing step and a bending step. Subsequently, the distal ends of the linear portions 41 of one conductor 40 is joined to the distal ends of the linear portion 41 of another conductor 40. As a result, the conductors 40 are continuous with each other so as to form the stator coil 30 wound around the stator core 20.

The method for manufacturing the stator 10 will now be described in detail.

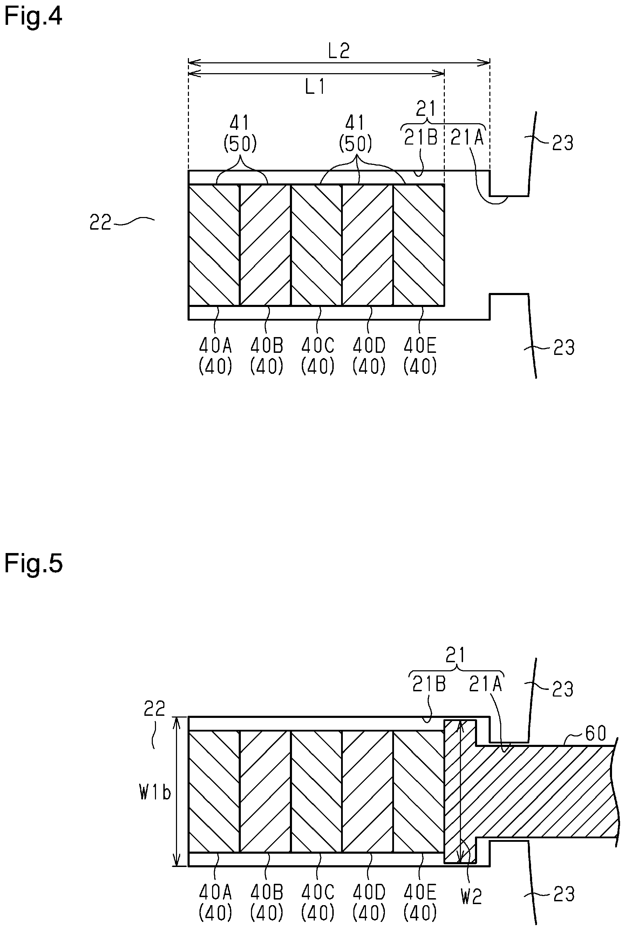

As shown in Fig. 4, the maximum number of linear portions 41 of conductors 40 are arranged in the slot 21; more specifically, in the main portion 21B of the slot 21. In the present embodiment, length L1 of five conductors 40 arranged in the radial direction is shorter than length L2 of the main portion 21B of the slot 21 in the radial direction (L1 < L2). The length of six conductors 40 arranged in the radial direction (not shown) would be longer than length L2 of the main portion 21B of the slot 21 in the radial direction. Thus, in the present embodiment, the maximum number of conductors 40 capable of being arranged in the slot 21 is five. The conductors 40 are hereinafter referred to as the first conductor 40A, the second conductor 40B, the third conductor 40C, the fourth conductor 40D, and the fifth conductor 40E in the order from the side of the back yoke 22.

After five conductors 40 are arranged in the slot 21, a first jig 60 is inserted through a section between the fifth conductor 40E and the opening portion 21A as shown in Fig. 5. Width W2 of the distal end of the first jig 60 is slightly smaller than width W1b of the main portion 21B of the slot 21. Further, the length of the first jig 60 in the axial direction (i.e., the length of the first jig 60 in the depth direction in the sheet) is longer than the length of the slot 21 in the axial direction (i.e., the length of the slot 21 in the axial direction of the stator core 20). Thus, the first jig 60 is arranged with its opposite ends in the axial direction protruding from the stator core 20.

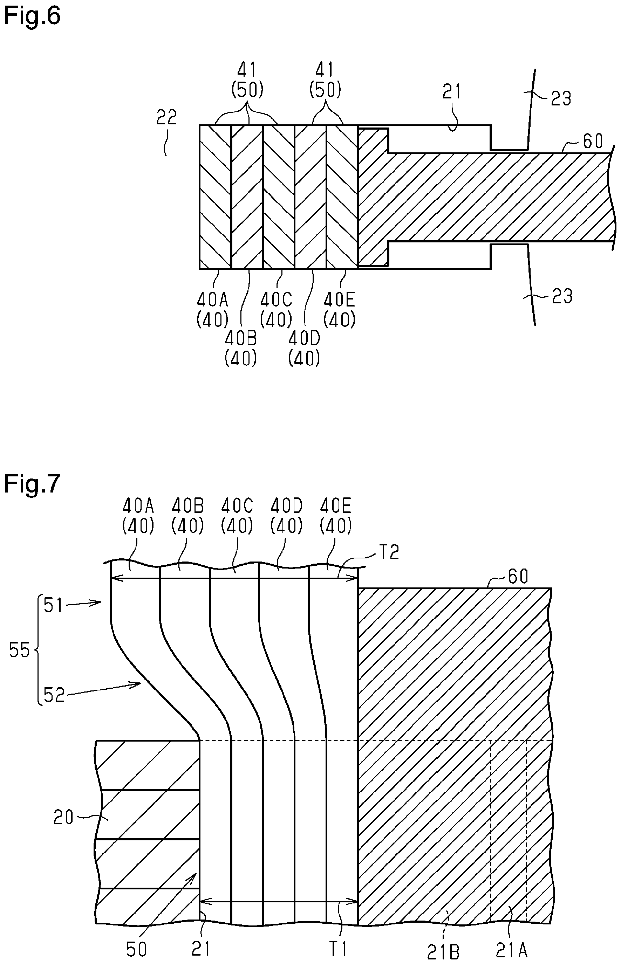

As shown in Fig. 6, the first jig 60 is moved outward from the state described immediately above in the radial direction to perform a first step in the pressing step. In the first step, the inner portion 50 of each conductor 40 is pressed toward the back yoke 22 using the first jig 60 so as to plastically deform the inner portion 50. Each of the inner portions 50 is crushed so that the width of the cross-section of each inner portion 50 becomes equal to the width of the main portion 21B. As a result, each inner portion 50 is deformed to the shape of a thin plate. This brings the outer circumferential surface of each inner portion 50 into close contact with the inner circumferential surface of the slot 21. More specifically, the first conductor 40A includes an opposing surface (the left surface in Fig. 6) opposing the back yoke 22, an opposing surface (the upper surface in Fig. 6) opposing one of the teeth 23 that are adjacent to the first conductor 40A, and an opposing surface (the lower surface in Fig. 6) opposing the other one of the teeth 23 that are adjacent to the first conductor 40A, and these opposing surfaces are in close contact with the inner circumferential surface of the slot 21. Further, the remaining conductors 40 other than the first conductor 40A, namely, the second conductor 40B to the fifth conductor 40E respectively include opposing surfaces (the upper surfaces in Fig. 6) opposing one of the teeth 23 adjacent to the second to fifth conductors 40E and opposing surfaces (the lower surfaces in Fig. 6) opposing the other one of the teeth 23 adjacent to the second to fifth conductors 40E, and these opposing surfaces are in close contact with the inner circumferential surface of the slot 21.

In the first step, after the cross-sectional shapes of the inner portions 50 of the conductors 40 are deformed in this manner, pressing is continued so as to press the conductors 40. This collectively extends the conductors 40 in the axial direction of the stator core 20.

More specifically, after the conductors 40 are extended in the axial direction in the first step, small cross-sectional portions 52 are respectively formed in the conductors 40 as shown in Fig. 7. The small cross-sectional portions 52 have a smaller cross-sectional area than the outer portions 51, each of which is a portion of the corresponding conductor 40 that is not pressed. The small cross-sectional portions 52 each correspond to a portion that extends and protrudes from the inside of the slot 21 toward the opposite sides in the axial direction. The small cross-sectional portions 52 are formed on the basal ends and the distal ends of the linear portions 41 of the conductors 40. Fig. 7 shows the structure of the distal side of the linear portions 41 of the conductors 40. The basal side of the linear portions 41 of the conductors 40, that is, the side of the curved portions 42 of the conductors 40, has the same structure as the distal side of the linear portions 41 of the conductors 40. Thus, the structure of the side of the curved portions 42 of the conductors 40 will not be described.

As the pressing using the first jig 60 progresses, the cross-sectional areas of the small cross-sectional portions 52 decrease. Thus, the cross-sectional areas of the small cross-sectional portions 52, which extend in the axial direction, decrease toward the slot 21 and increase toward the outer portions 51, which greatly protrude from the inside of the slot 21. The small cross-sectional portions 52 and the outer portions 51 form protrusions 55 in the conductors 40. The protrusions 55 are located outside of the slot 21.

When the conductors 40 are pressed in the first step, the total sum T1 of the thicknesses of the conductors 40 in the inner portions 50, which are arranged in the slot 21, becomes smaller than the total sum T2 of the thicknesses of the conductors 40 in the outer portions 51, which are arranged outside of the slot 21 (T1 < T2). Thus, the first jig 60 is used to press the outer portions 51 outward in the radial direction (toward the left side in Fig. 7) while extending the conductors 40 in the axial direction. The small cross-sectional portions 52 each have a relatively small cross-sectional area and thus have a relatively small thickness. Thus, the small cross-sectional portions 52 are smaller than the other portions in flexural rigidity obtained when the first jig 60 is pressed. Accordingly, the bending step is performed so that the small cross-sectional portions 52 are bent and deformed by the load produced when the outer portions 51 are pressed using the first jig 60. That is, in the bending step, while the conductors 40 are being extended in the first step, the first jig 60 is used to collectively bend and deform the small cross-sectional portions 52 so as to bend and deform the protrusions 55. When the small cross-sectional portions 52 are bent and deformed in the bending step, the bending deformation amount of the first conductor 40A, which is farthest from the first jig 60, is the largest and the bending deformation amount of the fifth conductor 40E, which is closest to the first jig 60, is the smallest. Thus, as the small cross-sectional portion 52 becomes farther from the first jig 60, the bending deformation amount of the small cross-sectional portion 52 increases.

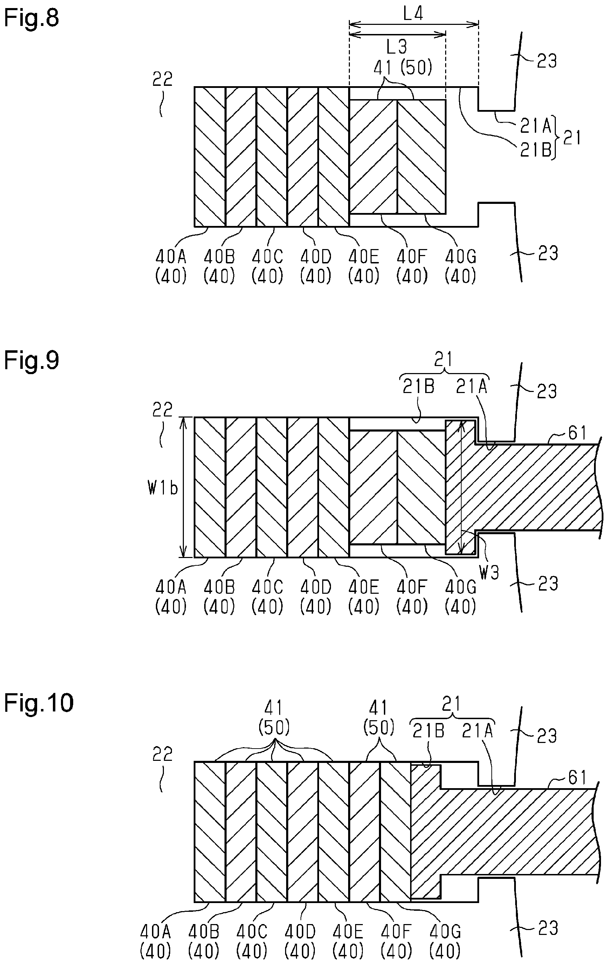

When the first step is performed to press and deform the conductors 40, a gap is created in the slot 21 as shown in Fig. 8. Thus, subsequently, new conductors 40 are inserted through the gap created in the slot 21. In the present embodiment, length L3 of two conductors 40 arranged in the radial direction is shorter than length L4 of the gap created in the main portion 21B of the slot 21 in the radial direction. The length of three conductors 40 arranged in the radial direction (not shown) is longer than length L4 of the gap in the radial direction. Thus, the maximum number of conductors 40 capable of being arranged in the gap is two. In this manner, the linear portions 41 of the maximum number of conductors 40 (two conductors 40) capable of being arranged in the gap newly created in the main portion 21B of the slot 21 are arranged in the gap. The newly-arranged two conductors 40 are hereinafter referred to as the sixth conductor 40F and the seventh conductor 40G in the order from the side of the back yoke 22.

After two conductors 40 are arranged in the slot 21, a second jig 61 is inserted through a section between the seventh conductor 40G and the opening portion 21A as shown in Fig. 9. Width W3 of the distal end of the second jig 61 is slightly smaller than width W1b of the main portion 21B of the slot 21. Further, the length of the second jig 61 in the axial direction (i.e., the length of the second jig 61 in the depth direction in the sheet) is longer than the length of the slot 21 in the axial direction (i.e., the length of the slot 21 in the axial direction of the stator core 20). Thus, the second jig 61 is arranged with its opposite ends in the axial direction protruding from the stator core 20.

As shown in Fig. 10, the second jig 61 is moved outward in the radial direction from the state described immediately above to perform a second step in the pressing step. In the second step, the inner portions 50 of the conductors 40 are pressed toward the back yoke 22 using the second jig 61. Since the first conductor 40A to the fifth conductor 40E that have already been plastically deformed in the first step resist deforming due to strain hardening, the inner portions 50 of the newly-arranged sixth conductor 40F and seventh conductor 40G are plastically deformed. Each of the inner portions 50 of the sixth conductor 40F and the seventh conductor 40G is crushed so that the width of the cross-section of the inner portion 50 becomes equal to the width of the main portion 21B of the slot 21. As a result, each inner portion 50 is deformed to the shape of a thin plate. This brings the outer circumferential surfaces of the inner portions 50 of the sixth conductor 40F and the seventh conductor 40G into close contact with the inner circumferential surface of the slot 21. More specifically, the sixth conductor 40F and the seventh conductor 40G include opposing surfaces (the upper surfaces in Fig. 10) opposing one of the teeth 23 adjacent to the sixth conductor 40F and the seventh conductor 40G and opposing surfaces (the lower surfaces in Fig. 10) opposing the other one of the teeth 23 adjacent to the sixth conductor 40F and the seventh conductor 40G, and these opposing surfaces are in close contact with the inner circumferential surface of the slot 21.

In the second step, after the cross-sectional shapes of the inner portions 50 of the sixth conductor 40F and the seventh conductor 40G are deformed in this manner, pressing is continued so as to press the conductors 40. This collectively extends the sixth conductor 40F and the seventh conductor 40G in the axial direction of the stator core 20 so as to form small cross-sectional portions 52 in the sixth conductor 40F and the seventh conductor 40G. In each of the sixth conductor 40F and the seventh conductor 40G, the small cross-sectional portion 52 and the outer portion 51 form a protrusion 55.

In the same manner as the first step, the second jig 61 used in the second step is used to perform the bending step so that the small cross-sectional portions 52 of the sixth conductor 40F and the seventh conductor 40G are bent and deformed. That is, in the bending step, while the sixth conductor 40F and the seventh conductor 40G are being extended in the second step, the small cross-sectional portions 52 are collectively bent and deformed. The deformation and bending of the small cross-sectional portions 52 of the sixth conductor 40F and the seventh conductor 40G further bend and deform the small cross-sectional portions 52 of the first conductor 40A to the fifth conductor 40E. The first step and the second step may be performed by commonizing the second jig 61 and the first jig 60, that is, using the same jig.

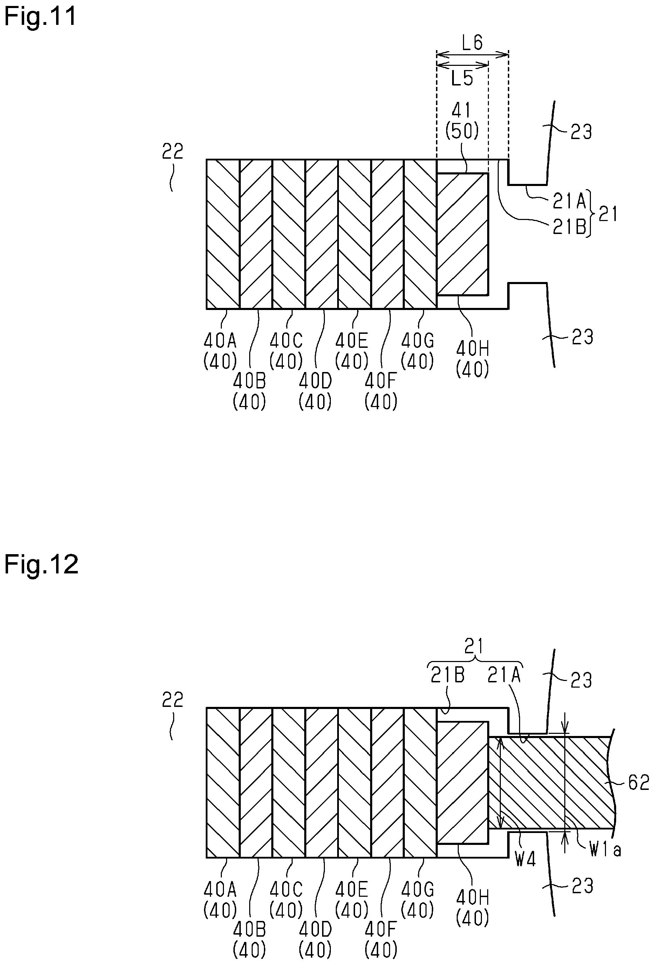

When the second step is performed to press and deform the conductors 40, a gap is created in the slot 21 as shown in Fig. 11. Thus, subsequently, a new conductor 40 is inserted through the gap created in the slot 21. In the present embodiment, length L5 of one conductor 40 arranged in the radial direction is shorter than length L6 of the gap created in the main portion 21B of the slot 21 in the radial direction. The length of two conductors 40 arranged in the radial direction (not shown) would be longer than length L6 of the gap in the radial direction. Thus, the maximum number of conductors 40 capable of being arranged in the gap is one. In this manner, the linear portions 41 of the maximum number of conductors 40 (one conductor 40) capable of being arranged is arranged in the gap newly created in the main portion 21B of the slot 21. The newly-arranged conductor 40 is hereinafter referred to as the eighth conductor 40H.

After the eighth conductor 40H is arranged in the slot 21, a third jig 62 is inserted through the opening portion 21A of the slot 21 as shown in Fig. 12. Width W4 of the third jig 62 is slightly smaller than width W1a of the opening portion 21A of the slot 21. Thus, the third jig 62 is inserted through the opening portion 21A of the slot 21 from the inner side in the radial direction. The length of the third jig 62 in the axial direction (i.e., the length of the third jig 62 in the depth direction in the sheet) is longer than the length of the slot 21 in the axial direction (i.e., the length of the slot 21 in the axial direction of the stator core 20). Thus, the third jig 62 is arranged with its opposite ends in the axial direction protruding from the stator core 20.

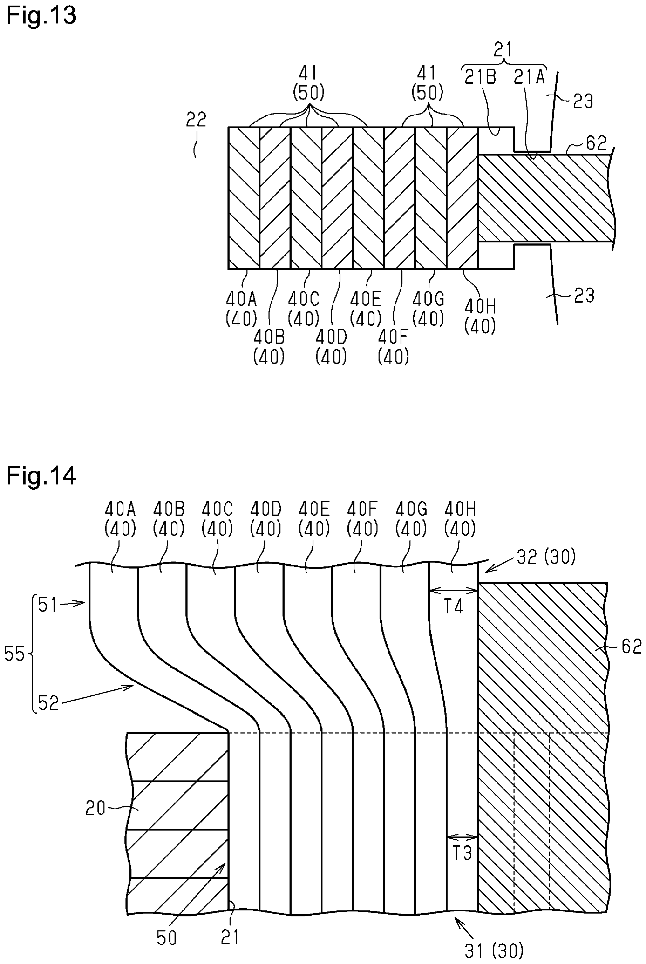

As shown in Fig. 13, the third jig 62 is moved outward in the radial direction from the state described immediately above to perform a third step in the pressing step. In the third step, the inner portions 50 of the conductors 40 are pressed toward the back yoke 22 using the third jig 62. Since the first conductor 40A to the seventh conductor 40G that have already been plastically deformed in the first step and the second step resist deforming due to strain hardening, the inner portion 50 of the newly-arranged eighth conductor 40H is plastically deformed. The inner portion 50 of the eighth conductor 40H is crushed so that the width of the cross-section of the inner portion 50 becomes equal to the width of the main portion 21B. As a result, the inner portion 50 is deformed to the shape of a thin plate. This brings the outer circumferential surface of the inner portion 50 of the eighth conductor 40H into close contact with the inner circumferential surface of the slot 21. More specifically, the eighth conductor 40H includes an opposing surface (the upper surface in Fig. 13) opposing one of the teeth 23 adjacent to the eighth conductor 40H and an opposing surface (the lower surface in Fig. 13) opposing the other one of the teeth 23 adjacent to the eighth conductor 40H, and these opposing surfaces are in close contact with the inner circumferential surface of the slot 21.

In the third step, after the cross-sectional shape of the inner portion 50 of the eighth conductor 40H is deformed in this manner, pressing is continued so as to press the conductors 40. This extends the eighth conductor 40H in the axial direction of the stator core 20.

More specifically, after the conductors 40 are extended in the axial direction in the third step, a small cross-sectional portion 52 is formed in the eighth conductor 40H as shown in Fig. 14. The small cross-sectional portion 52 has a smaller cross-sectional area than the outer portion 51, which is a portion of the eighth conductor 40H that is not pressed. In the eighth conductor 40H, the small cross-sectional portion 52 and the outer portion 51 form a protrusion 55.

When the eighth conductor 40H is pressed in the third step, thickness T3 of the inner portion 50 in the eighth conductor 40H becomes smaller than thickness T4 of the outer portion 51 (T3 < T4). Thus, the third jig 62 is used to press the outer portion 51 of the eighth conductor 40H outward in the radial direction (toward the left side in Fig. 14) while extending the eighth conductor 40H in the axial direction. Since the outer portion 51 of the eighth conductor 40H overlaps the outer portions 51 of the first conductor 40A to the seventh conductor 40G, the pressing force of the third jig 62 acts on the outer portions 51 of the first conductor 40A to the eighth conductor 40H. The small cross-sectional portions 52 each have a relatively small cross-sectional area and accordingly has a relatively small thickness. Thus, the small cross-sectional portions 52 are smaller than the other portions in flexural rigidity obtained when the third jig 62 is pressed. Thus, the bending step is performed so that the small cross-sectional portions 52 of the first conductor 40A to the eighth conductor 40H are bent and deformed by the load produced when the outer portion 51 of the eighth conductor 40H is pressed using the third jig 62. That is, in the bending step, while the eighth conductor 40H is being extended in the third step, the small cross-sectional portions 52 of the first conductor 40A to the eighth conductor 40H are collectively bent and deformed so as to bend and deform the protrusions 55. When the pressing step and the bending step are performed for the conductors 40, the bending deformation amount of the first conductor 40A, which is closest to the back yoke 22 and farthest from the third jig 62, is the largest and the bending deformation amount of the eighth conductor 40H, which is located on the inner side and is closest to the third jig 62, is the smallest. Thus, the bending deformation amount of each small cross-sectional portion 52 becomes larger toward the first conductor 40A.

After the bending step is performed to curve the small cross-sectional portions 52 of the conductors 40 outward in the radial direction, the linear portion 41 of each conductor 40 is folded in the circumferential direction so as to be joined to the linear portion 41 of another conductor 40. As a result, the stator coil 30 wound around the stator core 20 is formed with the conductors 40 continuous with each other.

In the stator coil 30 having the above-described structure, the parts of the inner portions 50 of the conductors 40 arranged in each slot 21 serve as the arrangement portions 31, and the protrusions 55 of the conductors 40 serve as the coil end 32 arranged outside of the slot 21. Since the outer circumferential surface of each inner portion 50 is in close contact with the inner circumferential surface of the slot 21, the outer circumferential surface of the arrangement portion 31 of the stator core 20 is in close contact with the inner circumferential surface of the slot 21. The protrusions 55 respectively include the small cross-sectional portions 52 and the outer portions 51. In the protrusions 55, the small cross-sectional portions 52 are located toward the slot 21. Thus, the coil end 32 includes the small cross-sectional portions 52 each having a smaller cross-sectional area than the other portions of the coil end 32, and the small cross-sectional portions 52 are located at the end of the coil end 32 toward the arrangement portions 31. In the coil end 32, the small cross-sectional portions 52 are bent and deformed outward in the radial direction so as to have a curved shape.

The operation and advantages of the present embodiment will now be described.
(1) In the present embodiment, the pressing step includes pressing the conductors 40 of the stator coil 30 and extending the conductors 40 in the axial direction of the stator core 20 so as to form the small cross-sectional portions 52. The small cross-sectional portions 52 each have a smaller cross-sectional area than the outer portions 51, which are portions of the conductors 40 that are not pressed. The small cross-sectional portions 52 each have a relatively small cross-sectional area and are thus bent and deformed more easily than the other portions of the protrusions 55. The bending step includes bending and deforming the small cross-sectional portions 52 so as to bend and deform the protrusions 55. This increases the curvature obtained when the protrusions 55 are bent and deformed and decreases the heights of the protrusions 55 protruding from the stator core 20. Thus, the height of the coil end 32 of the stator coil 30 protruding from the stator core 20 decreases. This provides the method for manufacturing the stator 10 that prevents the stator coil 30 from being enlarged while improving the space factor of the stator coil 30.
(2) The bending step includes bending and deforming the small cross-sectional portions 52 while extending the conductors 40 in the pressing step. Accordingly, the manufacturing time of the stator 10 is shortened by simultaneously performing the pressing step and the bending step instead of performing the bending step subsequent to the pressing step.
(3) In the present embodiment, the pressing step includes pressing the conductors 40 in a state of being arranged in the slot 21, thereby collectively extending the conductors 40. Further, the bending step includes collectively bending and deforming the small cross-sectional portions 52 of the conductors 40. This allows the conductors 40 to be pressed at the same time in the pressing step and the conductors 40 to be bent at the same time in the bending step. Accordingly, the manufacturing time of the stator 10 is further shortened.
(4) In the present embodiment, the pressing step includes the first step and the second step. In the first step, the first conductor 40A to the fifth conductor 40E (the maximum number of conductors 40 capable of being arranged in each slot 21) are pressed in a state of being arranged in the slot 21, thereby extending the conductors 40. In the second step, the sixth conductor 40F and the seventh conductor 40G that are newly arranged in the gap in the slot 21 created by pressing the first conductor 40A to the fifth conductor 40E in the first step (the maximum number of conductors 40 capable of being arranged in the gap) are pressed in a state of being arranged in the gap, thereby extending the sixth conductor 40F and the seventh conductor 40G. Thus, the first step collectively presses the maximum number of conductors 40 that can be pressed at the same time in the slot 21. In the second step, the maximum number of conductors 40 are rearranged in the gap created in the slot 21 in the first step and then pressed. This minimizes the number of times pressing is performed in the pressing step.
(5) In the present embodiment, the stator coil 30 includes the arrangement portions 31 respectively arranged in the slots 21 and the coil end 32 arranged outside of the slots 21. The outer circumferential surfaces of the arrangement portions 31 are in close contact with the inner circumferential surfaces of the slots 21. Thus, the gaps between the stator coil 30 and the slots 21 are relatively small and thus the space factor of the stator coil 30 improves. The coil end 32 includes the small cross-sectional portions 52 each having a smaller cross-sectional area than the other portions of the coil end 32, and the small cross-sectional portions 52 are located at the end of the coil end 32 toward the arrangement portions 31. The small cross-sectional portions 52 each have a curved shape. Since the small cross-sectional portions 52 each have a relatively small cross-sectional area, the small cross-sectional portions 52 are each bent and deformed more easily than the other portions of the coil end 32 and have a larger curvature than the other portions of the coil end 32. Thus, the height of the coil end 32 protruding from the stator core 20 decreases. This provides an armature that prevents the stator coil 30 from being enlarged while improving the space factor of the stator coil 30.

The present embodiment may be modified as follows. The present embodiment and the following modifications can be combined as long as they remain technically consistent with each other.

In the above-described embodiment, the pressing step extends the maximum number of conductors 40 in a state of being arranged in each slot 21. Instead, a smaller number of conductors 40 than the maximum number of conductors 40 may be extended in a state of being arranged in the slot 21. For example, in the above-described embodiment, two conductors 40 are first arranged in the slot 21 and then extended. Next, two conductors 40 are newly arranged in the slot 21 and then extended. Subsequently, two conductors 40 are further arranged in the slot 21 and then extended. Lastly, two conductors 40 are arranged in the slot 21 and then extended. Even such a structure allows eight conductors 40 to be coupled to the inside of the slot 21.

The pressing step presses the conductors 40 in a state of being arranged in the slot 21, thereby collectively extending the conductors 40. Instead, for example, the pressing step may press one conductor 40 in a state of being arranged in the slot 21, thereby extending the conductors 40 one by one.

In the bending step, the first jig 60, the second jig 61, and the third jig 62 are used to collectively bend and deform the small cross-sectional portions 52 of the conductors 40. Instead, the small cross-sectional portion 52 of each conductor 40 may be individually bent and deformed. For example, in the case of pressing one conductor 40 in a state of being arranged in the slot 21, the conductors 40 can be bent and deformed one by one using the jigs.

Each jig is longer in the axial direction than the stator core 20 such that the jig protrudes from the stator core 20 in the axial direction. While the conductors 40 are being extended in the pressing step, the small cross-sectional portions 52 are bent and deformed by pressing the conductors 40 using the portions of each jig that protrude from the stator core 20 in the axial direction. Instead, after the conductors 40 are extended in the pressing step, the small cross-sectional portions 52 may be bent and deformed. Such a structure is provided by separately arranging a pressing jig used to perform the pressing step and a bending jig used to perform the bending step. That is, a method may be employed in which the pressing jig is used to extend the conductors 40 so as to form the small cross-sectional portions 52 and then the bending jig is used to bend and deform the small cross-sectional portions 52.

In the above-described embodiment, the teeth 23 are T-shapes in plan view. Instead, for example, the teeth 23 may each have an I-shape in which the width is fixed in the radial direction.

The stator 10 including the stator core 20 and the stator coil 30 is described as an example of the armature. The armature is not limited to the stator 10. For example, the armature may be a rotor that includes a rotor core with slots 21 and a rotor coil coupled to the slots 21 of the rotor core, and the armature may have the same structure as the above-described embodiment.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims.

## Claims

1. A method for manufacturing an armature that includes an iron core (20) and a coil (30), the iron core (20) including slots (21), the coil (30) being coupled to the slots (21) of the iron core (20), the method comprising:
a pressing step that presses a conductor (40) of the coil (30) in each of the slots (21) and plastically deforms the conductor (40); and
a bending step that bends and deforms a protrusion (55) in the conductor (40), the protrusion (55) being located outside of the slot (21), wherein
the pressing step includes pressing the conductor (40) and extending the conductor (40) in an axial direction of the iron core (20) so that a small cross-sectional portion (52) is formed in the protrusion (55), the small cross-sectional portion (52) having a smaller cross-sectional area than a portion of the conductor (40) that is not pressed,
the bending step includes bending and deforming the small cross-sectional portion (52) so as to bend and deform the protrusion (55), wherein the bending step includes bending and deforming the small cross-sectional portion (52) while extending the conductor (40) in the pressing step, and
the conductor (40) includes conductors (40)
the pressing step includes:
a first step that presses a maximum number of the conductors (40) capable of being arranged in each of the slots (21) in a state in which the maximum number of the conductors (40) are arranged in the slot (21), thereby extending the conductors (40); and
**characterized in that**
a second step that presses a maximum number of the conductors (40) capable of being arranged in a gap in the slot (21) created by pressing the conductors (40) in the first step in a state in which the maximum number of the conductors (40) are arranged in the gap, thereby extending the conductors (40) arranged in the gap.

2. The method according to claim 1, wherein
the small cross-sectional portion (52) includes small cross-sectional portions (52),
the pressing step includes pressing the conductors (40) in a state of being arranged in each of the slots (21), thereby collectively extending the conductors (40), and
the bending step includes collectively bending and deforming the small cross-sectional portions (52) of the conductors (40).

## Patentansprüche

1. Verfahren zur Herstellung eines Ankers, der einen Eisenkern (20) und eine Spule (30) hat, wobei der Eisenkern (20) Schlitze (21) hat, wobei die Spule (30) mit den Schlitzen (21) des Eisenkerns (20) gekoppelt ist, wobei das Verfahren Folgendes aufweist:
einen Drückschritt, der einen Leiter (40) der Spule (30) in jeden der Schlitze (21) drückt und den Leiter (40) plastisch verformt; und
einen Biegeschritt, der einen Vorsprung (55) in dem Leiter (40) biegt und verformt, wobei sich der Vorsprung (55) außerhalb des Schlitzes (21) befindet, wobei
der Drückschritt ein Drücken des Leiters (40) und ein Verlängern des Leiters (40) in einer axialen Richtung des Eisenkerns (20) aufweist, sodass ein Kleinquerschnittsabschnitt (52) in dem Vorsprung (55) gebildet wird, wobei der Kleinquerschnittsabschnitt (52) eine kleinere Querschnittsfläche hat als ein Abschnitt des Leiters (40), der nicht gedrückt wird,
der Biegeschritt ein Biegen und ein Verformen des Kleinquerschnittsabschnitts (52) aufweist, um den Vorsprung (55) zu biegen und zu verformen, wobei der Biegeschritt ein Biegen und ein Verformen des Kleinquerschnittsabschnitts (52), während der Leiter (40) in dem Drückschritt verlängert wird, aufweist, und
der Leiter (40) Leiter (40) aufweist,
der Drückschritt aufweist:
einen ersten Schritt, der eine maximale Anzahl der Leiter (40), die in jedem der Schlitze (21) angeordnet werden können, in einem Zustand drückt, in welchem die maximale Anzahl der Leiter (40) in dem Schlitz (21) angeordnet ist, wodurch die Leiter (40) verlängert werden; und
**dadurch gekennzeichnet, dass**
einen zweiten Schritt, der eine maximale Anzahl der Leiter (40), die in einem Spalt in dem Schlitz (21) angeordnet werden können, der durch Drücken der Leiter (40) in dem ersten Schritt erzeugt wird, in einem Zustand, in welchem die maximale Anzahl der Leiter (40) in dem Spalt angeordnet ist, drückt, wodurch die in dem Spalt angeordneten Leiter (40) verlängert werden.

2. Verfahren nach Anspruch 1, wobei
der Kleinquerschnittsabschnitt (52) Kleinquerschnittsabschnitte (52) aufweist,
der Drückschritt ein Drücken der Leiter (40) in einem Zustand, in welchem sie in jedem der Schlitze (21) angeordnet sind, aufweist, wodurch die Leiter (40) gemeinsam verlängert werden, und
der Biegeschritt ein gemeinsames Biegen und Verformen der Kleinquerschnittsabschnitte (52) der Leiter (40) aufweist.

## Revendications

1. Procédé de fabrication d'une armature qui comporte un noyau de fer (20) et une bobine (30), le noyau de fer (20) comportant des fentes (21), la bobine (30) étant couplée aux fentes (21) du noyau de fer (20), le procédé comprenant :
une étape de pressage qui presse un conducteur (40) de la bobine (30) dans chacune des fentes (21) et déforme plastiquement le conducteur (40) ; et
une étape de pliage qui plie et déforme une protubérance (55) dans le conducteur (40), la protubérance (55) étant située à l'extérieur de la fente (21), dans lequel
l'étape de pressage comprend le pressage du conducteur (40) et l'extension du conducteur (40) dans une direction axiale du noyau de fer (20) de sorte qu'une petite partie de section transversale (52) est formée dans la protubérance (55), la petite partie de section transversale (52) ayant une zone de section transversale plus petite qu'une partie du conducteur (40) qui n'est pas pressée,
l'étape de pliage comporte le pliage et la déformation de la petite partie transversale (52) de manière à plier et à déformer la protubérance (55), l'étape de pliage comportant le pliage et la déformation de la petite partie transversale (52) tout en étendant le conducteur (40) lors de l'étape de pressage, et
le conducteur (40) comporte des conducteurs (40),
l'étape de pressage comporte :
une première étape qui presse un nombre maximum des conducteurs (40) capables d'être disposés dans chacune des fentes (21) dans un état dans lequel le nombre maximum des conducteurs (40) sont disposés dans la fente (21), étendant ainsi les conducteurs (40) ; et
**caractérisé en ce que**
une deuxième étape qui presse un nombre maximum des conducteurs (40) capables d'être disposés dans un espace de la fente (21) créé par la pression des conducteurs (40) lors de la première étape dans un état dans lequel le nombre maximum des conducteurs (40) sont disposés dans l'espace, étendant ainsi les conducteurs (40) disposés dans l'espace.

2. Procédé selon la revendication 1, dans lequel
la petite partie transversale (52) comporte de petites parties transversales (52),
l'étape de pressage comporte le pressage des conducteurs (40) dans un état où ils sont disposés dans chacune des fentes (21), étendant ainsi collectivement les conducteurs (40), et
l'étape de pliage comporte le pliage et la déformation collectifs des petites parties transversales (52) des conducteurs (40).
